(19) Europäisches Patentamt
European Patent Office
Office européen des brevets

(11) **EP 3 890 423 A1**

(12) **EUROPEAN PATENT APPLICATION**

(43) Date of publication:
06.10.2021 Bulletin 2021/40

(51) Int Cl.:
*H04W 72/08* (2009.01)

(21) Application number: 21157858.8

(22) Date of filing: 18.02.2021

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 30.03.2020 US 202063002143 P
08.02.2021 US 202117170699

(71) Applicant: **Samsung Electronics Co., Ltd.**
**Suwon-si 16677 (KR)**

(72) Inventors:
• **BAE, Jung Hyun**
**San Diego,, CA 92130 (US)**
• **FOUAD, Yaser Mohamed Mostafa Kamal**
**San Diego,, CA 92126 (US)**

(74) Representative: **Kuhnen & Wacker**
**Patent- und Rechtsanwaltsbüro PartG mbB**
**Prinz-Ludwig-Straße 40A**
**85354 Freising (DE)**

(54) **RESOURCE SELECTION PROCEDURE TO PRESERVE CHAIN INTEGRITY**

(57) Provided is a method of selecting, by a user equipment (UE), resources for a sidelink (SL) transmission, the method including determining a signaling window corresponding to a maximum time separation between a first resource and a second resource for the SL transmission, signaling the first resource and the second resource to another UE, excluding, from a set of candidate resources for the SL transmission, an ineligible candidate resource that causes a time separation between the first resource and the second resource to be greater than the signaling window, identifying a number of remaining candidate resources in the set, determining that the number of remaining candidate resources in the set is below a candidate resource threshold, and adjusting exclusion criteria to include in the set an eligible candidate resource that is otherwise eligible for exclusion based on initial exclusion criteria.

FIG. 1

EP 3 890 423 A1

**Description**

**CROSS-REFERENCE TO RELATED APPLICATION(S)**

The present application claims priority to, and the benefit of, U.S. Provisional Application Serial No. 63/002,143, filed March 30, 2020, entitled "MODE 2 RESOURCE SELECTION PROCEDURE TO PRESERVE CHAIN INTEGRITY," the entire content of which is incorporated herein by reference.

**FIELD**

Aspects of some embodiments of the present disclosure relate to a method, apparatus, and system for sidelink resource selection for wireless communications.

**BACKGROUND**

In the field of wireless communications, such as with respect to New Radio (NR) vehicle-to-everything (V2X) applications, a User Equipment (UE) may be configured to communicate directly with neighboring UEs over a distributed system via sidelink (SL) transmissions. That is, each UE may be able to communicate with any other UE without first relaying communications through a base station.

Further, the UEs in such distributed systems may select resources for future SL transmissions according to a resource selection procedure. Moreover, the UEs may signal their selected future resources to neighboring UEs to reduce or minimize interference between the UEs that may otherwise result from a resource collision, where two or more UEs attempt to transmit using a same resource at a same time.

**SUMMARY**

Aspects of embodiments of the present disclosure relate to wireless communications, and provide improvements to Mode 2 resource selection procedures to preserve chain integrity.

According to some embodiments of the present disclosure, there is provided a method of selecting, by a user equipment (UE), resources for a sidelink (SL) transmission, the method including determining a signaling window corresponding to a maximum time separation between a first resource and a second resource for the SL transmission, signaling the first resource and the second resource to another UE, excluding, from a set of candidate resources for the SL transmission, an ineligible candidate resource that causes a time separation between the first resource and the second resource to be greater than the signaling window, identifying a number of remaining candidate resources in the set, determining that the number of remaining candidate resources in the set is below a candidate resource threshold, and adjusting exclusion criteria to include in the set an eligible candidate resource that is otherwise eligible for exclusion based on initial exclusion criteria.

The method may further include repeating the adjusting the exclusion criteria until the remaining candidate resources in the set allow the UE to select resources such that the time separation between the first resource and the second resource is less than or equal to the signaling window, and the number of remaining candidate resources in the set is above the candidate resource threshold.

The candidate resource that is otherwise eligible for exclusion may comprise a candidate resource that is reserved for another SL transmission having a RSRP value that is above a priority-based RSRP threshold, or a candidate resource that corresponds to an allowed periodicity value.

The adjusting the exclusion criteria may comprise increasing the priority-based RSRP threshold.

The priority-based RSRP threshold may be increased by about 1 decibel (dB) to about 3 dB.

The priority-based RSRP threshold may be increased by an amount that is based on a priority value corresponding to the SL transmission.

The adjusting the exclusion criteria may comprise excluding less than all of periodicities corresponding to an allowed periodicity value.

The excluding less than all of the periodicities may comprise excluding a subset of the periodicities based on a frequency of use of the subset of the periodicities in a geographical area.

The adjusting the exclusion criteria may comprise decreasing a reselection counter value to increase a likelihood of identifying candidate resources for a periodic transmission within an amount of time.

The method may further include limiting a decrease in the reselection counter value to a threshold value.

The method may further include setting the threshold value based on a priority value of the SL transmission.

The method may further include comparing a duration of usage of a first same set of resources used by a first other UE with a duration of usage of a second same set of resources used by a second other UE, and including in the set of candidate resources for the SL transmission, one or more resources corresponding to the first other UE or the second other UE based on a determination of a greater duration of usage.

According to other embodiments of the present disclosure, there is provided a user equipment (UE) for performing a method of selecting resources for a sidelink (SL) transmission, wherein the UE is configured to determine a signaling window corresponding to a maximum time separation between a first resource and a second resource for the SL transmission, signal the first resource and the second resource to another UE, exclude, from a set of candidate resources for the SL transmission, an ineligible candidate resource that causes a time separation between the first resource and the second resource to be greater than the signaling window, identify a number of remaining candidate resources in the set, determine that the number of remaining candidate resources in the set is below a candidate resource threshold, and adjust exclusion criteria to include in the set an eligible candidate resource that is otherwise eligible for exclusion based on initial exclusion criteria.

The UE may be configured to repeat the adjusting the exclusion criteria until the remaining candidate resources in the set allow the UE to select resources such that the time separation between the first resource and the second resource is less than or equal to the signaling window, and the number of remaining candidate resources in the set is above the candidate resource threshold.

The candidate resource that is otherwise eligible for exclusion may comprise a candidate resource that is reserved for another SL transmission having an RSRP value that is above a priority-based RSRP threshold, or a candidate resource that corresponds to an allowed periodicity value.

The adjusting the exclusion criteria may comprise excluding less than all of periodicities corresponding to an allowed periodicity value.

The adjusting the exclusion criteria may comprise decreasing a reselection counter value to increase a likelihood of identifying candidate resources for a periodic transmission within an amount of time.

The UE may be configured to compare a duration of usage of a first same set of resources used by a first other UE with a duration of usage of a second same set of resources used by a second other UE, and include in the set of candidate resources for the SL transmission, one or more resources corresponding to the first other UE or the second other UE based on a determination of a greater duration of usage.

According to other embodiments of the present disclosure, there is provided a non-transitory computer readable medium implemented on a user equipment (UE), the non-transitory computer readable medium having computer code that, when executed on a processor, implements a method of selecting resources for a sidelink (SL) transmission in a system including the UE, a base station, and one or more other UEs, wherein the base station and/or the one or more other UEs are capable of being communicatively coupled with the UE to configure the UE to perform a method of selecting resources for a sidelink (SL) transmission, the method including determining a signaling window corresponding to a maximum time separation between a first resource and a second resource for the SL transmission, signaling the first resource and the second resource to another UE, excluding, from a set of candidate resources for the SL transmission, an ineligible candidate resource that causes a time separation between the first resource and the second resource to be greater than the signaling window, identifying a number of remaining candidate resources in the set, determining that the number of remaining candidate resources in the set is below a candidate resource threshold, and adjusting exclusion criteria to include in the set an eligible candidate resource that is otherwise eligible for exclusion based on initial exclusion criteria.

The computer code, when executed by the processor, may further implement the method of selecting resources for the SL transmission by causing the UE to repeat the adjusting the exclusion criteria until the remaining candidate resources in the set allow the UE to select resources such that the time separation between the first resource and the second resource is less than or equal to the signaling window, and the number of remaining candidate resources in the set is above the candidate resource threshold.

Accordingly, embodiments of the present disclosure provide improvements to, and advantages for, sidelink resource selection. For example, aspects of embodiments of the present disclosure provide improvements to the resource selection procedure to preserve resource chain integrity by effectively relaxing exclusions and restrictions of a resource selection procedure on candidate resources for future SL transmissions, thereby increasing a number of resources that are available for resource selection, while also prioritizing chain integrity and reducing or minimizing resource collisions.

## BRIEF DESCRIPTION OF THE DRAWINGS

Non-limiting and non-exhaustive embodiments of the present disclosure are described with reference to the following figures, wherein like reference numerals refer to like parts throughout the various views unless otherwise specified.

FIG. 1 is a system diagram depicting a possible system for sidelink (SL) communications, according to some embodiments of the present disclosure;

FIG. 2 is a timing diagram depicting sidelink transmissions from more than one user equipment (UE) and depicting a resource collision, according to some embodiments of the present disclosure;

FIG. 3 is a flowchart depicting a summary of a Mode 2 resource selection procedure in New Radio (NR) vehicle-to-everything (V2X) communications, according to a related art;

FIGS. 4A and 4B (collectively, FIG. 4) are timing diagrams depicting methods of selecting resources for a SL transmission, according to some embodiments of the present disclosure;

FIGS. 5A and 5B (collectively, FIG. 5) are flowcharts depicting the methods of selecting resources for a SL transmission depicted in FIG. 4, according to some embodiments of the present disclosure;

FIGS. 6A and 6B (collectively, FIG. 6), are timing diagrams depicting a method of selecting resources for a SL transmission, according to some embodiments of the present disclosure;

FIG. 7 is a flowchart depicting the method of selecting resources for a SL transmission depicted in FIG. 6, according to some embodiments of the present disclosure;

FIG. 8 is a timing diagram depicting a method of selecting resources for a SL transmission, according to some embodiments of the present disclosure; and

FIG. 9 is a flowchart depicting the method of selecting resources for a SL transmission depicted in FIG. 8, according to some embodiments of the present disclosure.

Corresponding reference characters indicate corresponding components throughout the several views of the drawings. Skilled artisans will appreciate that elements in the figures are illustrated for simplicity and clarity, and have not necessarily been drawn to scale. For example, the dimensions of some of the elements, layers, and regions in the figures may be exaggerated relative to other elements, layers, and regions to help to improve clarity and understanding of various embodiments. Also, common but well-understood elements and parts not related to the description of the embodiments might not be shown in order to facilitate a less obstructed view of these various embodiments and to make the description clear.

## DETAILED DESCRIPTION

Features of the inventive concept and methods of accomplishing the same may be understood more readily by reference to the detailed description of embodiments and the accompanying drawings. Hereinafter, embodiments will be described in more detail with reference to the accompanying drawings. The described embodiments, however, may be embodied in various different forms, and should not be construed as being limited to only the illustrated embodiments herein. Rather, these embodiments are provided as examples so that this disclosure will be thorough and complete, and will fully convey the aspects and features of the present inventive concept to those skilled in the art. Accordingly, processes, elements, and techniques that are not necessary to those having ordinary skill in the art for a complete understanding of the aspects and features of the present inventive concept may not be described.

Unless otherwise noted, like reference numerals, characters, or combinations thereof denote like elements throughout the attached drawings and the written description, and thus, descriptions thereof will not be repeated. Further, parts not related to the description of the embodiments might not be shown to make the description clear. In the drawings, the relative sizes of elements, layers, and regions may be exaggerated for clarity. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

In the detailed description, for the purposes of explanation, numerous specific details are set forth to provide a thorough understanding of various embodiments. It is apparent, however, that various embodiments may be practiced without these specific details or with one or more equivalent arrangements.

It will be understood that, although the terms "zeroth," "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

It will be understood that when an element, layer, region, or component is referred to as being "on," "connected to," or "coupled to" another element, layer, region, or component, it can be directly on, connected to, or coupled to the other element, layer, region, or component, or one or more intervening elements, layers, regions, or components may be present. However, "directly connected/directly coupled" refers to one component directly connecting or coupling another component without an intermediate component. Meanwhile, other expressions describing relationships between components such as "between," "immediately between" or "adjacent to" and "directly adjacent to" may be construed similarly. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments only and is not intended to be limiting of the present disclosure. As used herein, the singular forms "a" and "an" are intended to include the plural forms as well, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

As used herein, the term "substantially," "about," "approximately," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

When one or more embodiments may be implemented differently, a specific process order may be performed differently from the described order. For example, two consecutively described processes may be performed substantially at the same time or performed in an order opposite to the described order.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the spirit and scope of the embodiments of the present disclosure.

Unless otherwise defined, all terms (including technical and scientific terms) used herein have the same meaning as commonly understood by one of ordinary skill in the art to which the present inventive concept belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

As mentioned above, a User Equipment (UE) may be configured to communicate directly with neighboring UEs over a distributed system via sidelink (SL) transmissions. Accordingly, each UE may be able to communicate with any other UE using SL transmissions, rather than relaying communications through a base station via uplink and downlink transmissions. For example, communication with a base station (e.g., to a network) may be limited to communication associated with configuration (e.g., to determine how the system may operate). Also, the base station may serve as a sensing unit. However, the base station is generally not relied upon to relay data from one UE to another UE for SL transmissions.

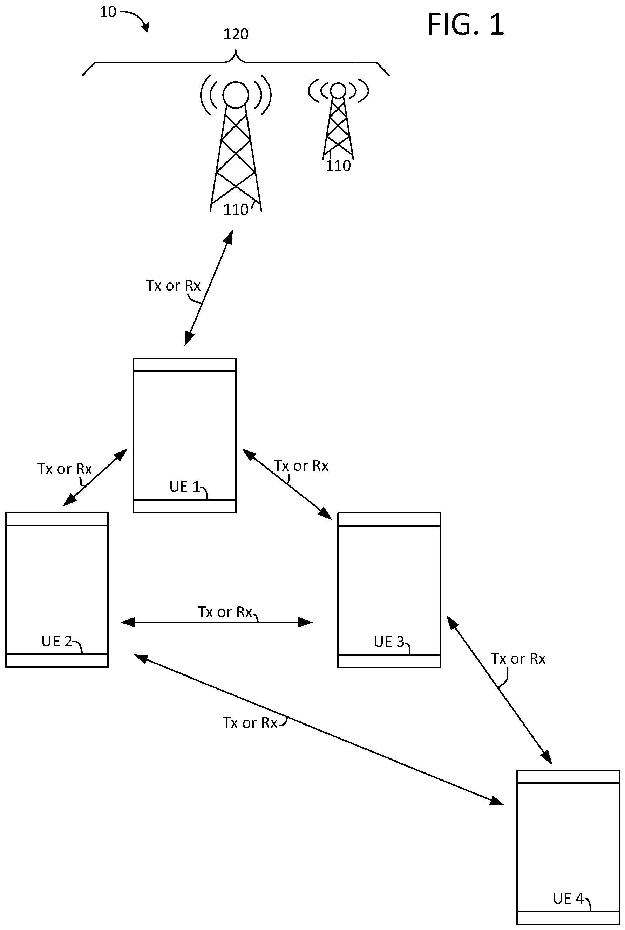

FIG. 1 is a system diagram depicting a possible system for sidelink (SL) communications, according to some embodiments of the present disclosure.

Referring to FIG. 1, a wireless communication system 10 may include one or more UEs (e.g., a mobile handset, a wireless device, a wireless modem, etc.). The one or more UEs may include a first UE (UE 1), a second UE (UE 2), a third UE (UE 3), and a fourth UE (UE 4). The UEs may be neighboring UEs. The UEs may be capable of transmitting (Tx) data directly to, and/or receiving (Rx) data directly from, neighboring UEs. Furthermore, one or more base stations 110, which correspond to one or more networks 120, and which may relay signals between UEs for both downlink and uplink transmissions, may be limited to providing configuration information for operation of the system, or to serving as sensing units, in relation to SL transmissions between UEs. Moreover, the wireless communication system 10 may not include a base station, for example, when the one or more UEs operate out of coverage.

Thus, in New Radio vehicle-to-everything (NR V2X), UEs (e.g., UE 1, UE 2, UE 3, or UE 4) may be configured to signal which resources are intended to be used for future SL transmissions in first stage Sidelink Control Information (SCI), thus, creating a chain of signaled resources. The signaling of future resources to neighboring UEs may reduce or minimize interference between the UEs because the neighboring UEs may avoid the signaled resources when selecting their own future resources for transmission. Thus, a resource collision may be avoided, which improves transmission reliability and overall system throughput.

However, in the current SCI format, resources may be signaled only if the resources fit within a window of 32 slots. Furthermore, the first stage SCI includes three parameters that may be used to signal selected, or reserved, resources to other UEs: (1) frequency resource assignment, which may be used to notify other UEs of the number of reserved subchannels and of a starting subchannel for up to two selected resources for future transmissions; (2) time resource assignment, which may be used to notify other UEs of the time separation between the slot in which the SCI is transmitted and up to two selected resources for future transmissions; and (3) resource reservation period, which may be used to notify other UEs of the resource reservation period in the case of periodic traffic (e.g., a periodic transmission).

When a first UE receives SCI from another of the neighboring UEs, the first UE may identify a priority that corresponds to reserved resources indicated by the SCI. The first UE may use the signaled information indicated by the SCI to exclude the reserved resources indicated by the SCI from a potential resource list (e.g., a set of candidate resources for a future SL transmission of the first UE) to avoid a resource collision.

To be signaled to neighboring UEs by the first stage SCI, and to allow the neighboring UEs to exclude the reserved resources to thereby maintain chain integrity, the reserved resources may be selected to fall within (e.g., to fit within or inside of) a signaling window (e.g., a 32-slot signaling window).

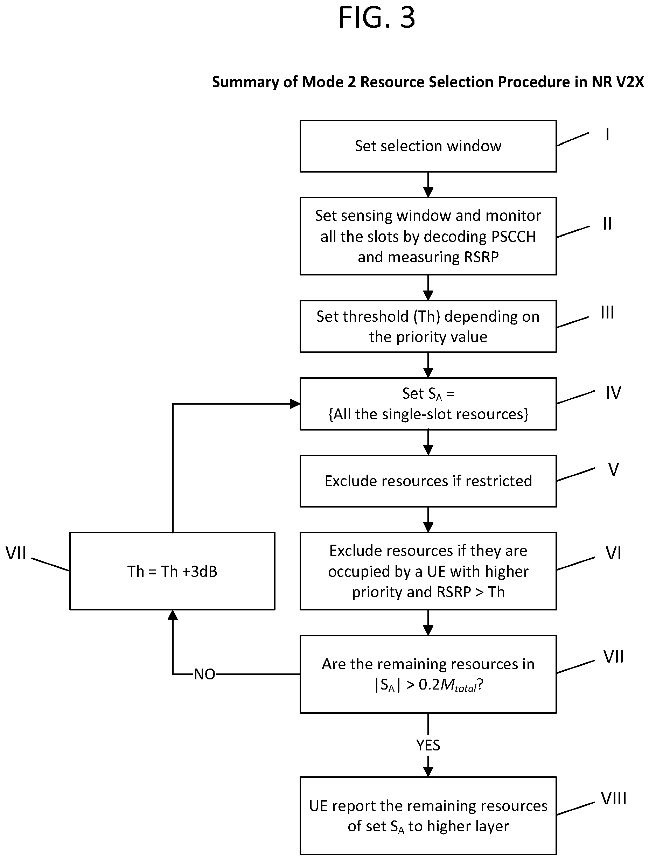

However, the current NR Mode 2 resource selection procedure, in which resources are selected autonomously by the UEs (see Table 1 below and FIG. 3), does not consider a resource signaling capability during a first operation of resource selection. For example, the current NR Mode 2 resource selection procedure does not include an operation for determining whether the chain integrity may be preserved by a set of candidate resources selected, by a UE, for a future SL transmission, at least in a first operation. For example, a first operation of the resource selection procedure that may be performed by a physical layer (PHY) might not take into consideration a maximum slot separation between consecutive slots (e.g., consecutive slots that have been selected as candidate resources for a future SL transmission) so that the slots may be signaled by SCI. For example, the resource selection procedure may be done in two operations. In a first operation, the PHY may select a set of resources that fit within the selection window and meet a specific criteria without determining whether a chain integrity may be preserved. In a second operation that is performed by higher layers, first, second, or third resources may be selected from the set of candidate resources provided from the first operation, and these resources may be expected to maintain the chain integrity unless the UE is unable to find sufficient resources to preserve the chain integrity.

According to some embodiments of the present disclosure, the chain integrity for a future SL transmission may be preserved or maintained when a maximum time separation between consecutive slots (e.g., between a first resource in a chain of resources and a second resource in the chain of resources for the future SL transmission) fits within the signaling window (e.g., is less than or equal to the signaling window). On the other hand, the chain integrity for a future SL transmission might not be preserved when a maximum time separation between consecutive slots is greater than, or does not fit within, the signaling window.

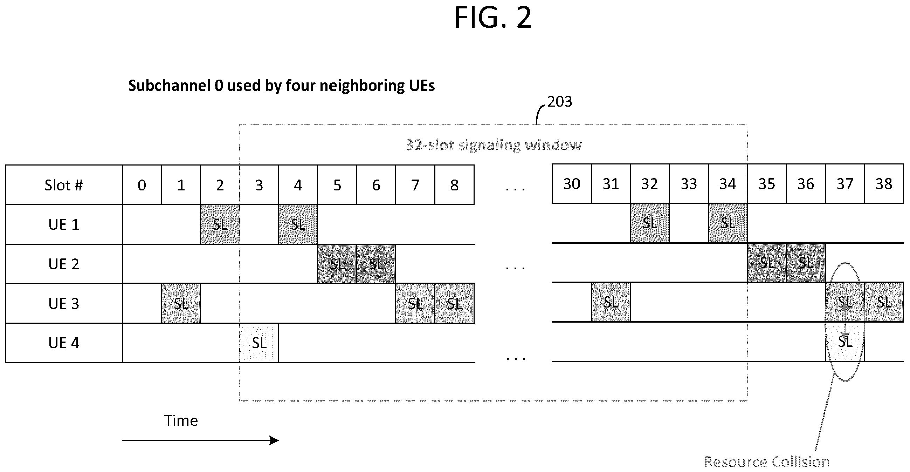

FIG. 2 is a timing diagram depicting sidelink transmissions from more than one user equipment (UE) and depicting a resource collision, according to some embodiments of the present disclosure.

Referring to FIG. 2, the resource selection procedure, as will be discussed in the following section, provides a set of resources to higher layers to be selected for resource reservation. The higher layers may refer to a Media Access Control (MAC) layer (e.g., a protocol layer, above the signaling layer, which handles sensing and actual data transmission).

In the present example, UE 4 may have selected subchannel 0 in slots 3 and 37, from within a resource selection window, as candidate resources for a future SL transmission. When the higher layer performs a selection of resources for the SL transmission and sends the reservation signaling in slot 3 (e.g., in the first stage SCI), UE 4 will not be able to signal the reservation of slot 37 to the neighboring UEs (e.g., to UE 1, UE 2, or UE 3) because slot 37 is beyond, or outside of, the 32-slot signaling window for signaling by the time resource assignment field. Accordingly, UE 3 may attempt to use (e.g., may attempt to transmit on, or may attempt to occupy) subchannel 0 on slot 37 without notifying the other UEs beforehand. Thus, a resource collision may occur on subchannel 0 in slot 37.

In the event of the resource collision, a data transmitted (e.g., a packet) on slot 37 may be lost as a result. For example, when UE 1 listens (e.g., scans) for subchannel 0 on slot 37, UE 1 may not be able to receive any of the data transmitted by UE 3 or UE 4, or UE 1 may only be able to decipher the data transmission between UE 3 or UE 4 having the greatest signal strength. For example, and referring to FIG. 1, UE 1 may be able to listen to UE 3 because UE 3 is closer than UE 4 and, thus, UE 3 may have a greater signal strength as measured by UE 1. A resource collision may result in interference due to transmissions overlapping in time and frequency.

Furthermore, an effect of the resource collision may be loss of throughput and higher latency. For example, when a packet is lost, a UE may have two options: retransmit or completely dump (e.g., disregard or discard) the packet. If the UE retransmits, a delay may be created due to occupying additional resources (e.g., later in time), or the retransmission may create interference with other UEs. If the packet is dumped, the packet reception ratio may decrease.

The SL resource selection procedure according to some embodiments of the present disclosure may reduce or prevent resource collisions. However, preventing a resource collisions may not be guaranteed 100% in distributed communication systems (e.g., due to the complex nature of many moving UEs that are transmitting and receiving simultaneously, etc.). Therefore, embodiments of the present disclosure provide improvements and advantages to sidelink resource selection by enhancing the ability of resource selection procedures to reduce the risk of resource collisions through an adjustment of resource exclusion criteria to exclude fewer resources, when suitable, to preserve chain integrity.

FIG. 3 is a flowchart depicting a summary of a Mode 2 resource selection procedure in New Radio (NR) vehicle-to-everything (V2X) communications, according to a comparative example.

Referring to FIG. 3 and to Table 1 (below), Table 1 shows relevant information from 8.1.4 of 3rd Generation Partnership Project (3GPP) specification 38.214 disclosing seven procedural "steps," noting that portions indicating "TBD" were yet to be decided as of the date of the release of the specification (before U.S. Provisional Application Serial No. 63/002,143 was filed on March 30, 2020).

Table 1

| In resource allocation Mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission: |
|---|
| - the resource pool from which the resources are to be reported;<br>- L1 priority, $prio_{TX}$;<br>- the remaining packet delay budget;<br>- the number of sub-channels to be used for the PSSCH/PSCCH transmission in a slot, $L_{subCH}$;<br>- optionally, the resource reservation interval, $P_{rsvp\_TX}$ in units of ms.<br>The following higher layer parameters affect this procedure:<br>- *t2min_SelectionWindow:* internal parameter $T_{2min}$ is set to the corresponding value from higher layer parameter *t2min_SelectionWindow* for the given value of $prio_{TX}$.<br>-*SL-ThresRSRP_pi_pj:* this higher layer parameter provides an RSRP threshold for each combination ($p_i$, $p_j$), where $p_i$ is the value of the priority field in a received SCI format 0-1 and $p_j$ is the priority of the transmission of the UE selecting resources; for a given invocation of this procedure, $p_j = prio_{TX}$.<br>-*RsforSensing* selects if the UE uses the PSSCH-RSRP or PSCCH-RSRP measurement, as defined in subclause 8.4.2.1.<br>- *reservationPeriodAllowed*<br>- *t0_SensingWindow*: internal parameter $T_0$ is defined as the number of slots corresponding to *t0_SensingWindow* ms.<br>The resource reservation interval, $P_{rsvp\_TX}$ if provided, is converted from units of ms to units of logical slots, resulting in $P'_{rsvp\_TX}$.<br><br>Notation: $(t_0^{SL}, t_1^{SL}, t_2^{SL}, ...)$ denotes the set of slots which can belong to a sidelink resource pool and is defined in [TBD]. |
| The following steps may be used:<br>  I.   A candidate single-slot resource for transmission $R_{x,y}$ is defined as a set of $L_{subCH}$ contiguous sub-channels with sub-channel x+j in slot $t_y^{SL}$ where $j = 0 ... . .., L_{subCH} - 1$. The UE shall assume that any set of $L_{subCH}$ contiguous sub-channels included in the corresponding resource pool within the time interval $[n + T_1, n + T_2]$ correspond to one candidate single-slot resource, where selection of $T_1$ is up to UE implementation under $0 \le T_1 \le T_{proc,1}$, where $T_{proc,1}$ is TBD; If $T_{2min}$ is shorter than the remaining packet delay budget (in slots) then $T_2$ is up to UE implementation subject to $T_{2min} \le T_2 \le$ remaining packet budget (in slots); otherwise $T_2$ is set to the remaining packet delay budget (in slots). The total number of candidate single-slot resources is denoted by $M_{total}$. |

(continued)

| | | |
|---|---|---|
| | II. | The sensing window is defined by the range of slots [$n$-$T_0$,$n$-$T_{proc,0}$) where $T_0$ is defined above and $T_{proc,0}$ is TBD. The UE shall monitor slots which can belong to a sidelink resource pool within the sensing window except for those in which its own transmissions occur. The UE shall perform the behavior in the following steps based on the decoded PSCCH and the measured RSRP in these slots. |
| | III. | The internal parameter $Th(p_j)$ is set to the corresponding value from higher layer parameter *SL-ThresRSRP_ pi_pj* for $p_j$ equal to the given value of *prio$_{TX}$* and each priority value $p_i$. |
| | IV. | The set $S_A$ is initialized to the set of all the candidate single-slot resources. |
| | V. | The UE shall exclude any candidate single-slot resource $R_{x,y}$ from the set $S_A$ if it meets all the following conditions: |
| | | a. The UE has not monitored slot $t_m^{SL}$ in Step II. |
| | | b. For any periodicity value allowed by the higher layer parameter *reservationPeriodAllowed* and a hypothetical SCI format 0-1 received in slot $t_m^{SL}$ " "with "Resource reservation Period" field set to that periodicity value and indicating all subchannels of the resource pool in this slot, condition c in step VI would be met. |
| | VI. | The UE shall exclude any candidate single-slot resource $R_{x,y}$ from the set $S_A$ if it meets all the following conditions: |
| | | a. the UE receives an SCI format 0-1 in slot $t_m^{SL}$ " and "Resource reservation Period" field, if present" and "Priority" field in the received SCI format 0-1 indicate the values $P_{rsvp\_RX}$ and *prio$_{RX}$*, respectively according to [4]; |
| | | b. the RSRP measurement performed, according to received SCI format 0-1, is higher than $Th(prio_{RX})$; |
| | | c. the SCI format received in slot $t_m^{SL}$ or the same SCI format which, if and only i" the "Resource reservation Period" field is present in the received SCI format 0-1, is assumed to be received in slot(s) $t_{m+q\times P'_{rsvp\_RX}}^{SL}$ determines according to [4] the set of resource blocks and slots which overlaps with $R_{x,y+j\times P'_{rsvp\_TX}}$ for $q$=1, 2, ..., Q and $j$=0, 1, ..., $C_{resel}$ - 1. Here, $P'_{rsvp\_RX}$ is $P_{rsvp\_RX}$ converted to units of logical slots, Q = if $P_{rsvp\_RX} \le T_{scal}$ and n' - $m \le P'_{rsvp\_RX}$, where $t_{n'}^{SL} = n$ if slot n belongs to the set $\left(t_0^{SL}, t_1^{SL}, \ldots, t_{Tmax}^{SL}\right)$, otherwise slot $t_{n'}^{SL}$ is the first slot after slot n belonging to the set $\left(t_0^{SL}, \ldots, \ldots, t_{Tmax}^{SL}\right)$; otherwise Q = 1. $T_{scal}$ is TBD. |
| | VII. | $\left\lceil \dfrac{T_{scal}}{P_{rsvp\_RX}} \right\rceil$ If the number of candidate single-slot resources remaining in the set $S_A$ is smaller than 0.2 - $M_{total}$, then $Th(p_i)$ is increased by 3 dB for each priority value $Th(p_i)$ and the procedure continues with step 4. |
| | VIII. | UE shall report remaining of set $S_A$ to higher layers, and high layer then randomly selects a candidate resource for transmission. |

The eight "steps," or operations, from the procedure above may be summarized by the flowchart of FIG. 3. For example, in operation (I), a selection window may be set; in operation (II), a sensing window may be set and a UE may monitor all slots by decoding a physical sidelink control channel (PSCCH) and measuring reference signal received power (RSRP); in operation (III) a threshold (Th) may be set depending on the priority value of the transmission for the UE that is selecting resources; in operation (IV), a set of candidate resources may be initialized to all the single-slot resources; in operation (V), certain exclusionary rules/restrictions may be established for excluding candidate resources from the set; in operation (VI), certain other exclusionary rules may be established (e.g., excluding resources from the list that are occupied by a UE having a higher priority and an RSRP that is above the threshold (Th); in operation (VII), a UE may determine whether the remaining resources in the set are more than, e.g., 20% (as determined by configuration) of the total number of single-slot resources $M_{total}$, and, if not, the threshold (Th) may be increased by 3dB to try again and exclude fewer resources; and in operation (VIII), if more than, e.g., 20% of $M_{total}$ remain after operation (VII), the candidate resources may be passed to the higher layers for a random selection.

Furthermore, to address the issue of chain integrity, in RAN1 #100b, a related art proposal suggested a restriction on the Mode 2 resource selection procedure, whereby a distance between any two resources may be enforced to be less than 32 logical slots to thereby allow signaling of the resources by the SCI. However, restricting the available resources to 32 logical slots may limit the available resources for selection and increase the risk of a resource collision. For example, as discussed above, a UE looking for resources may transmit on resources that do not preserve chain integrity if insufficient resources are available within 32 slots.

Accordingly, aspects of some embodiments of the present disclosure provide improvements to the resource selection procedure to preserve, or improve, resource chain integrity by effectively relaxing exclusions and restrictions on candidate resources for a future SL transmission to increase a number of resources for resource selection while preserving chain integrity and reducing or minimizing a risk of resource collisions.

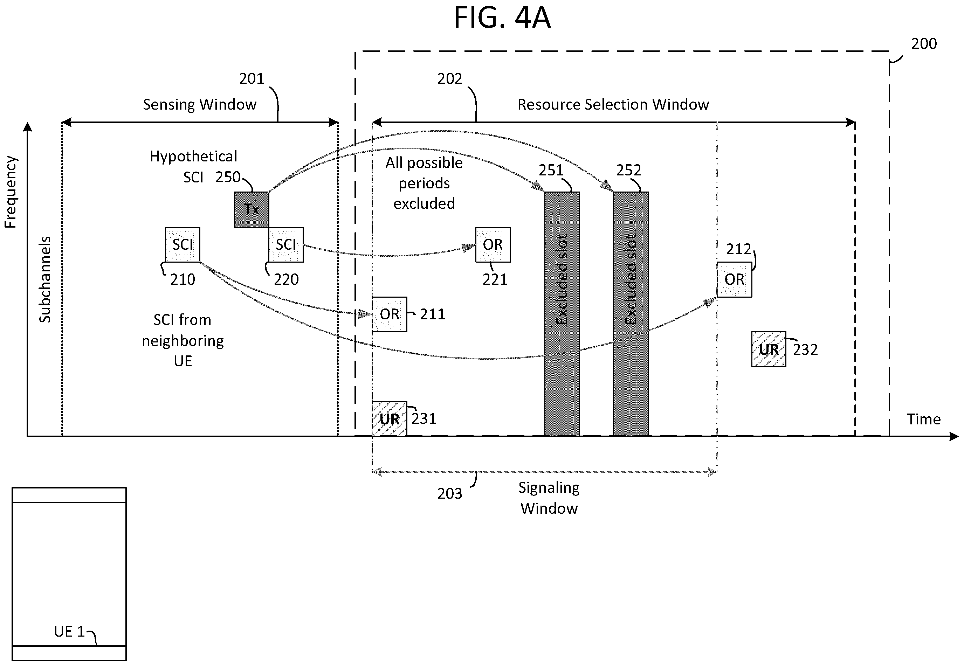

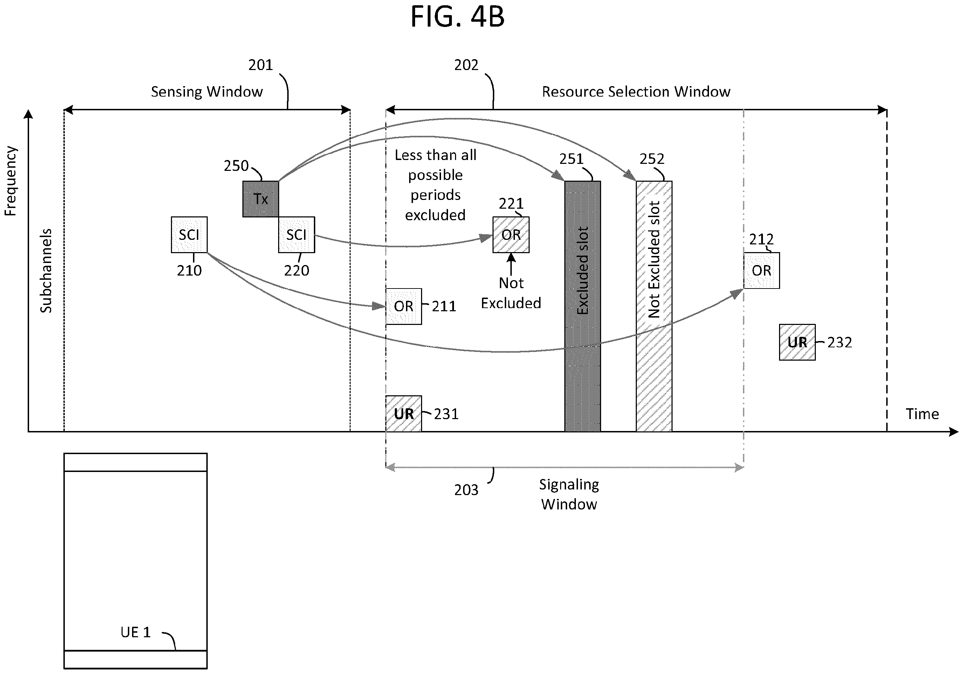

FIGS. 4A and 4B (collectively, FIG. 4) are timing diagrams depicting methods of selecting resources for a SL transmission, according to some embodiments of the present disclosure.

In some embodiments, based on pre-configuration, an associated physical sidelink control channel (PSCCH) demodulation reference signal (DMRS) reference signal received power (RSRP) threshold (hereinafter, "RSRP threshold" or "priority-based RSRP threshold") for resource selection may be increased to allow a UE to have access to more resources (e.g., by excluding fewer resources) after determining whether a chain integrity may be preserved for a future SL transmission.

In some embodiments, based on pre-configuration, an associated physical sidelink shared channel (PSSCH) demodulation reference signal (DMRS) reference signal received power (RSRP) threshold (hereinafter, "RSRP threshold" or "priority-based RSRP threshold") for resource selection may be increased to allow a UE to have access to more resources (e.g., by excluding fewer resources) after determining whether a chain integrity may be preserved for a future SL transmission.

For example, a UE may reference a priority-based RSRP threshold to evaluate a RSRP value (e.g., a value that is indicative of a signal strength) from a neighboring UE to determine whether a resource that is reserved by the neighboring UE should be considered occupied or unoccupied. For example, the priority-based RSRP threshold may be an RSRP threshold that is affected by priority (e.g., not a priority threshold). For example, a priority of the UE may be used to determine the RSRP threshold, such that the RSRP threshold may be set higher as a result of the UE having a higher priority transmission or lower as a result of the UE having a lower priority transmission. Thus, a resource reserved by a neighboring UE having a relatively high RSRP value may be considered occupied by the UE when the UE has a relatively low priority transmission, and a resource reserved by a neighboring UE having a relatively low RSRP value may be considered unoccupied by the UE when the UE has a relatively high priority transmission.

For example, the UE may compare a threshold (e.g., a priority-based RSRP threshold) with RSRP values (e.g., signal strengths) of neighboring UE transmission traffic to determine whether a resource may be considered occupied or unoccupied. Furthermore, the threshold may be adjusted based on a determination that a chain integrity may not be preserved by the remaining candidate resources. For example, one main reason the chain integrity might not be preserved is that there may be a limitation on a number of resources because many resources may be reserved by other UEs (e.g., other UEs signaling their reserved resources by SCI). Thus, some resource selection procedures might not allow a UE to select resources that are sufficient to preserve the chain integrity in some situations.

Accordingly, the resource selection procedure may be updated (e.g., modified or improved) by embodiments of the present disclosure to increase the RSRP threshold (e.g., by about 3 dB), thereby enriching the set of available resources for resource selection. For example, when insufficient resources are available to preserve chain integrity within a set of candidate resources, then $Th(p_i)$ can be increased (e.g., by about 3 dB) for each priority value $Th(p_i)$ when chain integrity might not be preserved in at least one or more resource subsets (two or three resources, depending on the value of *maxNumResource* signaled in SCI) within the set of resources passed to the higher layers.

Furthermore, the increase in $Th(p_i)$ may occur in steps (e.g., steps of about 1 dB) and may be repeated until a sufficient number of resource subsets suitable to preserve the chain integrity are able to be selected at the end of the resource selection procedure. The determination of whether a sufficient number of resource subsets are provided may be set as a percentage of the total number of resources that are expected to be passed to the higher layers (e.g., about 20%, depending on configuration).

Moreover, the above increase in $Th(p_i)$ may be based on a priority of a transport block (TB) that initiated the resource selection procedure. For example, higher priority traffic might have a higher limit on the allowable increase and step size (e.g., may allow for a greater increase and step size) of the threshold value $Th(p_i)$. For example, a UE looking for resources for a future SL transmission having a high priority may be allowed to increase the threshold by about 4 dB per step, while another UE looking for resources for a future SL transmission having a lower priority may be allowed to increase the threshold by only about 1 dB per step.

Additionally, when no resources may be found to preserve the chain integrity, based on increasing $Th(p_i)$ to a certain limit based on the associated TB priority, the set of candidate resources may be either passed to the higher layers or not, depending on the TB priority that initiated the resource selection. For example, some priority levels may be allowed to proceed without preserving chain integrity.

Referring to FIG. 4A, one of the neighboring UEs (e.g., UE 1 from FIG. 1) may set a resource selection window 202 corresponding to a resource pool 200 of candidate resources for the SL transmission. UE 1 may set a sensing window 201 for monitoring SCI and for measuring the signal strengths of neighboring UEs (e.g., UE 2, UE 3, and UE 4 in FIG. 1). For example, a first SCI resource 210 within the sensing window 201 may contain information for an aperiodic transmission that reserves a first resource 211, and for a periodic transmission that reserves a second resource 212 (e.g., the transmission signaled by the first SCI resource 210 may be a mixture of aperiodic and periodic transmissions). A second SCI resource 220 within the sensing window 201 may correspond to an aperiodic transmission for reserving a third resource 221. Accordingly, the first resource 211, the second resource 212, and the third resource 221 may be occupied resources (OR). Thus, UE 1 may exclude the first resource 211, the second resource 212, and the third resource 221 from a set of candidate resources for the future SL transmission of UE 1.

Additionally, there may be other reserved resources within the resource selection window 202 in other embodiments, as well as other SCI within the sensing window 201, such that unoccupied resources (UR) (e.g., unreserved resources) may be relatively scarce. UE 1 may select a first unoccupied resource 231 and a second unoccupied resource 232 within the resource selection window 202. However, because the second unoccupied resource 232 might not be within a signaling window 203 (e.g., with respect to the first unoccupied resource 231), selecting the first unoccupied resource 231 and the second unoccupied resource 232 might not preserve a chain integrity of the SL transmission of UE 1.

Referring to FIG. 4B, UE 1 may adjust the threshold to exclude fewer resources (e.g., by increasing the threshold by about 1 dB to about 3 dB or more). For the purpose of illustration, the same resource reference numbers from FIG. 4A are used in FIG. 4B, although the resources of FIG. 4B may depict different resources in both time and frequency from the resources of FIG. 4A. For example, the third resource 221 may have been associated with a transmission by UE 4 (see FIG. 1), which may be relatively distant from UE 1. Thus, the signal strength of UE 4 might not correspond to a priority value (.g.., a signal strength) that is above the increased threshold. Accordingly, (see FIG. 4B) UE 1 may effectively declare the third resource 221 to be unoccupied based on the increased threshold and, thus, might not exclude the third resource 221 from the set of candidate resources. Thus, UE 1 may include the first unoccupied resource 231 and the third resource 221 as candidate resources (e.g., not exclude them) because the first unoccupied resource 231 and the third resource 221 fall within the signaling window 203 (e.g., they may maintain the chain integrity). Furthermore, because the signal strength of UE 4 that had reserved the third resource 221 is below the threshold, a resource collision corresponding to the third resource 221 between UE 1 and UE 4 might not result in significant interference.

In some embodiments, when exclusion is based on hypothetical SCI reception due to a UE failing to monitor a slot n, only a subset of the allowable resource reservation periods may be considered. For example, only the resources that would have been indicated by a subset of the allowed periodicities in *reservationPeriodAllowed* may be excluded. Accordingly, fewer resources may be excluded when there are insufficient resources available to preserve chain integrity.

For example, a UE might not monitor a slot n for potential SCI reception (e.g., because it was transmitting at that slot). In this case, the UE may assume that hypothetical SCI is received, and may exclude less than all of the possible period values (e.g., may exclude only resources based on a subset of the possible period values). For example, assuming that *reservationPeriodAllowed* indicates ten possible periods, the UE may exclude only five of the periods when excluding the resources based on hypothetical SCI. Contrastingly, in the 3GPP specification, all of the periods indicated by *reservationPeriodAllowed* are considered when excluding the resources (e.g., all possible periods of hypothetical SCI may be excluded).

Furthermore, the selected subset of the periods from *reservationPeriodAllowed* may be based on a frequency at which they are used in a given geographical area. For example, the five most frequently used period values from the set *reservationPeriodAllowed* may be considered for resource exclusion by the resource selection procedure. Moreover, because such an exclusion may be based on hypothetical SCI that was not actually received, there is less risk of a resource collision, as compared to resources that are signaled by SCI that was actually detected by a UE.

Referring again to FIG. 4A, UE 1 may have been transmitting during a slot corresponding to first hypothetical SCI resource 250 within the sensing window 201. Accordingly, UE 1 may or may not have missed SCI that signals a reservation of resources from another UE because, at any given time slot, a UE may not listen (e.g., receive) and transmit simultaneously, which may be referred to as a half-duplex constraint. Because of the half-duplex constraint, the wireless communication system 10 (see FIG. 1), including the UE 1, may be configured to assume that SCI containing all possible periods (e.g., as determined based on the system configuration) was received while UE 1 was transmitting and, thus, may exclude all of the possible periods to protect the system. For example, a system may be configured with four possible periods: about 20 milliseconds (ms); about 40 ms; about 60 ms; and about 80 ms, although the present disclosure is not limited thereto. Thus, a UE may exclude all possible periods (n+20, n+40, n+60, and n+80).

For example, UE 1 may assume that SCI was received in the slot corresponding to the first hypothetical SCI resource 250, and may exclude all possible periods corresponding to the hypothetical SCI resource 250 (e.g., a fourth resource 251 and a fifth resource 252).

Alternatively, referring to FIG. 4B, UE 1 may exclude less than all possible periods corresponding to the hypothetical SCI resource 250 (e.g. only exclude the fourth resource 251) to provide access to more resources. Thus, UE 1 may include the first unoccupied resource 231 and the fifth resource 252 as candidate resources (e.g., not exclude them) because they fall within the signaling window 203 (e.g., because they may maintain the chain integrity). Furthermore, UE 1 may exclude based on a subset of the periods regardless of whether there are sufficient resources to maintain the chain integrity. For example, the exclusion based on the subset of the periods may happen before checking whether the resource selection set has sufficient resources to maintain the chain integrity.

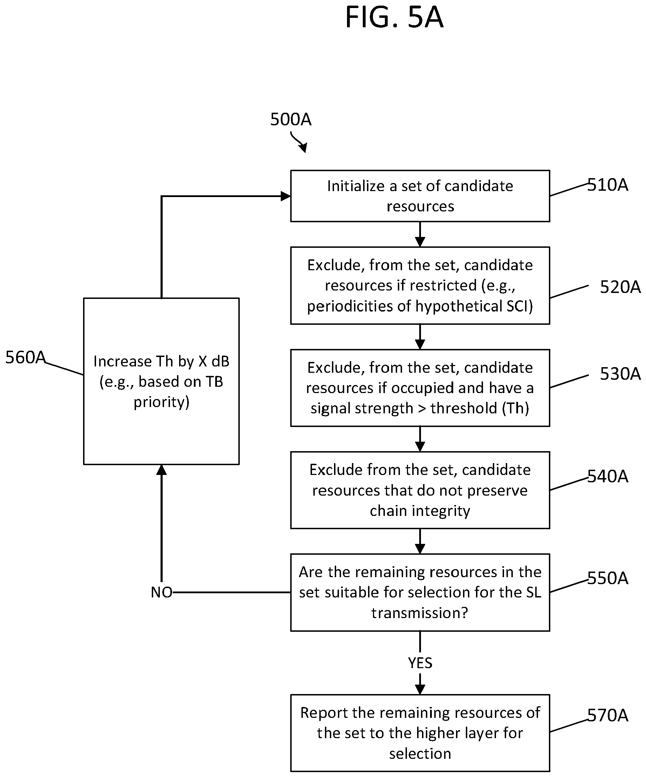

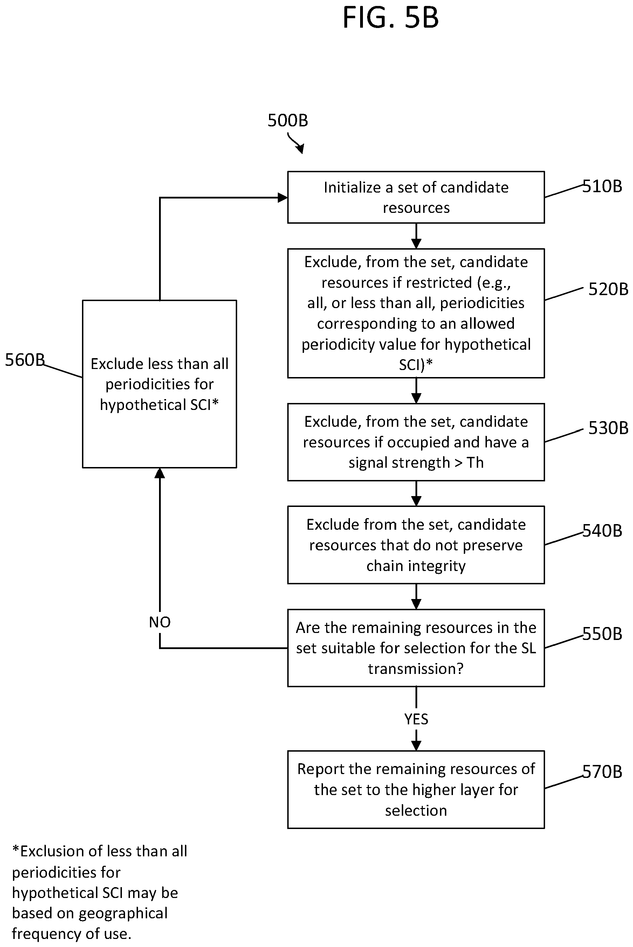

FIGS. 5A and 5B (collectively, FIG. 5) are flowcharts depicting the methods of selecting resources for a SL transmission depicted in FIG. 4, according to some embodiments of the present disclosure.

Referring to FIG. 5A, a method 500A of selecting resources for a SL transmission may be performed, wherein a UE may be configured to: initialize a set of candidate resources (e.g., one or more of the resources within a resource selection window may initially be included in the set) (operation 510A); exclude, from the set, candidate resources when they may be restricted (e.g., based on one or more exclusion criteria, such as excluding one or more periodicities corresponding to hypothetical SCI, or based on an allowed periodicity value of the hypothetical SCI) (operation 520A); exclude, from the set, candidate resources according to one or more exclusion criteria relating to occupied resources (e.g., determining whether a resource is unoccupied or occupied and/or excluding an occupied resource based on a determination of whether a signal strength, which may be related to an RSRP measurement, of a transmission that is associated with the occupied resource is below a priority threshold (Th)) (operation 530A); exclude from the set, candidate resources that may not preserve a chain integrity of a chain of resources for the SL transmission (e.g., when a maximum time separation between a first resource and a second resource in the chain of resources for the SL transmission is outside of, does not fit within, or is greater than, a signaling window (operation 540A); determine whether the remaining candidate resources in the set may be suitable for selection by the UE for the SL transmission (e.g., based on a minimum number of candidate resources or a percentage of a number of resources, such as a total number of single-slot resources, corresponding to a resource selection window and/or a resource pool) (operation 550A); adjust (e.g., increase) the threshold (Th) by a number of dB (e.g., about 1 dB or more) when the remaining resources in the set are not suitable for selection for the SL transmission to exclude fewer resources, and perform the previous operations again and increasing the threshold again until the remaining candidate resources in the set are suitable for selection by the UE for the SL transmission (operation 560A); and report the remaining candidate resources of the set to the higher layer for selection (e.g., by the UE, for the SL transmission) when the remaining candidate resources in the set are suitable for selection by the UE for the SL transmission (operation 570A). Furthermore, the increase in the threshold in operation 560A may be based on a TB priority (e.g., a higher priority transmission may be allowed to increase the threshold by more than a lower priority transmission for each iteration of the procedure). Accordingly, the resource selection restrictions (e.g., exclusion criteria) may be adjusted (e.g., relaxed) to help maintain chain integrity.

Referring to FIG. 5B, a method 500B of selecting resources for a SL transmission may be performed, wherein a UE may be configured to: initialize a set of candidate resources (e.g., one or more of the resources within a resource selection window may initially be included in the set) (operation 510B); exclude, from the set, candidate resources when they may be restricted (e.g., based on one or more exclusion criteria, such as excluding one or more periodicities corresponding to hypothetical SCI, which may be based on an allowed periodicity/period value of the hypothetical SCI) (operation 520B); exclude, from the set, candidate resources according to one or more exclusion criteria relating to occupied resources (e.g., determining whether a resource is unoccupied or occupied and/or excluding an occupied resource based on determining whether a signal strength, which may be related to an RSRP measurement, of a transmission associated with the occupied resource may be below a priority threshold (Th)) (operation 530B); exclude from the set, candidate resources that may not preserve a chain integrity of a chain of resources for the SL transmission (e.g., when a maximum time separation between a first resource and a second resource in the chain of resources for the SL transmission is outside of a signaling window (operation 540B); determine whether the remaining candidate resources in the set may be suitable for selection by the UE for the SL transmission (e.g., based on a minimum number of candidate resources or a percentage of a number of resources, which may be a total number of single-slot resources, corresponding to a resource selection window and/or a resource pool) (operation 550B); adjust a number of periodicities excluded (e.g., to less than all periodicities, or to a subset of all periodicities, corresponding to a periodicity value) based on hypothetical SCI, when the remaining resources in the set are not suitable for selection for the SL transmission, to exclude fewer resources, and perform the previous operations again and decreasing the amount of excluded periodicities until the remaining candidate resources in the set are suitable for selection by the UE for the SL transmission (operation 560B); and report the remaining candidate resources of the set to the higher layer for selection (e.g., by the UE, for the SL transmission) when the remaining candidate resources in the set are suitable for selection by the UE for the SL transmission (operation 570B). Furthermore, the decrease in the number of excluded periodicities may be based on a frequency at which the periodicities are used in a given geographical area (e.g., more frequently used period values may be excluded from the set of candidate resources, while less frequently used period values may be included in the set of candidate resources). Accordingly, the resource selection restrictions (e.g., exclusion criteria) may be adjusted (e.g., relaxed) to help maintain chain integrity. Moreover, the exclusion based on a subset of periodicities may occur regardless of a determination that candidate resources may not preserve the chain integrity for the SL transmission.

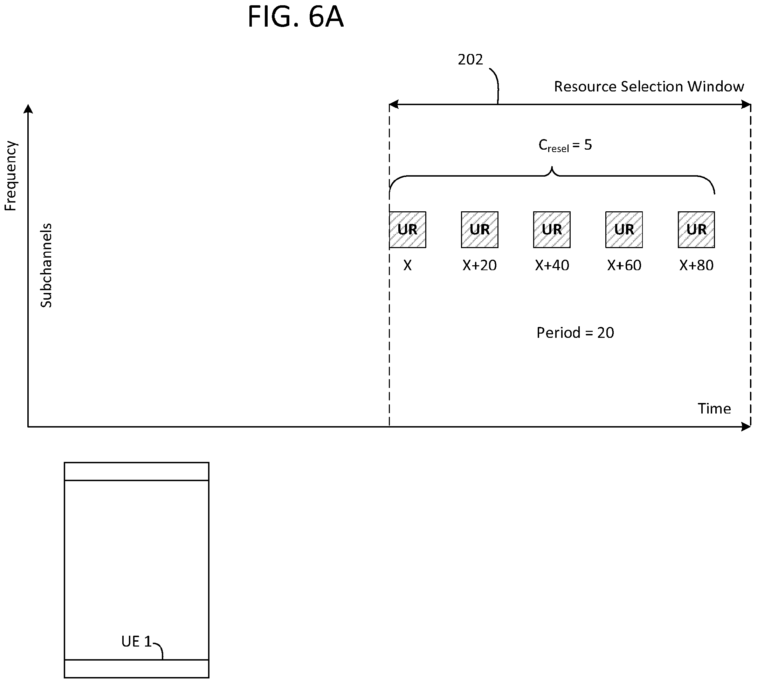

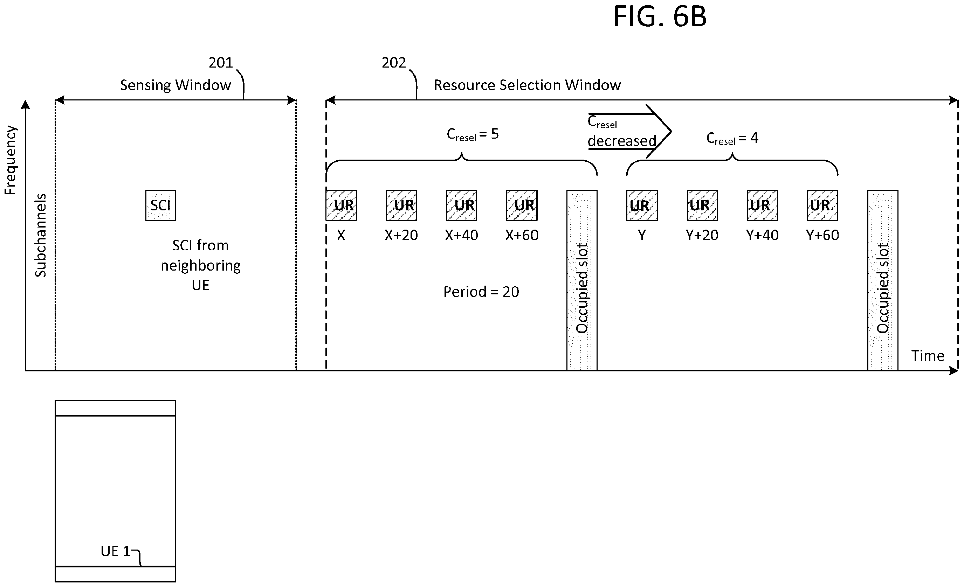

FIGS. 6A and 6B (collectively, FIG. 6), are timing diagrams depicting a method of selecting resources for a SL transmission, according to some embodiments of the present disclosure.

Referring to FIGS. 6A and 6B, a UE may be configured to temporarily reduce a reselection counter $C_{resel}$ value (e.g., a reselection counter value $C_{resel}$), which corresponds to periodic transmissions, when performing resource selection to increase the chance of finding resources that preserve the chain integrity. For example, reducing the reselection counter $C_{resel}$ value may increase the number of resources available for selection.

When performing resource selection for periodic transmissions, a UE may be required to find resources for a first transmission of the UE, as well as $C_{resel}$-1 periodic transmissions (e.g., four periodic transmissions following the first transmission of the UE, given a reselection counter $C_{resel}$ value of 5). However, it may not be possible for the UE to find an adequate number of available resources to preserve a chain integrity. Accordingly, the UE may be configured to reduce the value of $C_{resel}$ (e.g., temporarily) to be able to pass more resource subsets that preserve the chain integrity to the higher layer.

Additionally, to maintain suitable system performance, the value of the reselection counter $C_{resel}$ may be limited to values above a specific threshold (e.g., a minimum value). For example, if $C_{resel}$ is set to a value that is too low (e.g., about 1), a large number of UEs may frequently change their resources at any given slot, thereby increasing the chance of collision and reducing the benefits of the resource selection procedure.

Furthermore, a lower reselection counter $C_{resel}$ value threshold may be based on the priority value $prio_{TX}$. For example, a UE may reduce the reselection counter $C_{resel}$ value to a lower minimum value (e.g., a lower threshold or limit) based on the transmission having a higher priority value $prio_{TX}$.

For example, and referring to FIG. 6A, UE 1 may look for periodic resources for a periodic SL transmission having a period of about 20 (e.g., 20 ms). When the reselection counter $C_{resel}$ value is configured to be about 5, UE 1 may look for resources corresponding to slot X, slot X+20, slot X+40, slot X+60, and slot X+80 (e.g., before being able to shift to a different resource). For example, the reselection counter $C_{resel}$ value may be a number that may determine how many periods of a periodic transmission UE 1 may consider for finding a reservation on a first set of resources before shifting to a second set of resources (e.g., based on a probabilistic determination when a reselection counter reaches zero). However, it may be difficult for UE 1 to find a suitable number of resources (e.g., when there are many neighboring UEs).

For example, and referring to FIG. 6B, UE 1 may look for four unoccupied resources corresponding to $C_{resel}$-1 periods following a first unoccupied resource at slot X. However, there may be no unoccupied resources available at slot X+80. Thus, UE 1 may be configured to decrease the reselection counter $C_{resel}$ value (e.g., by one), such that the reselection counter $C_{resel}$ value equals about 4, to increase a chance of finding enough resources. For example, UE 1 may look for three unoccupied resources corresponding to $c_{resel}$-1 periods following a first unoccupied resource at slot Y when the reselection counter $C_{resel}$ value is adjusted (e.g., decreased) to about 4. Thus, an occupied resource at slot Y+80 may not decrease the chance of UE 1 finding sufficient resources. Accordingly, UE 1 may send multiple retransmissions (e.g., aperiodic retransmissions) within each period that preserve chain integrity.

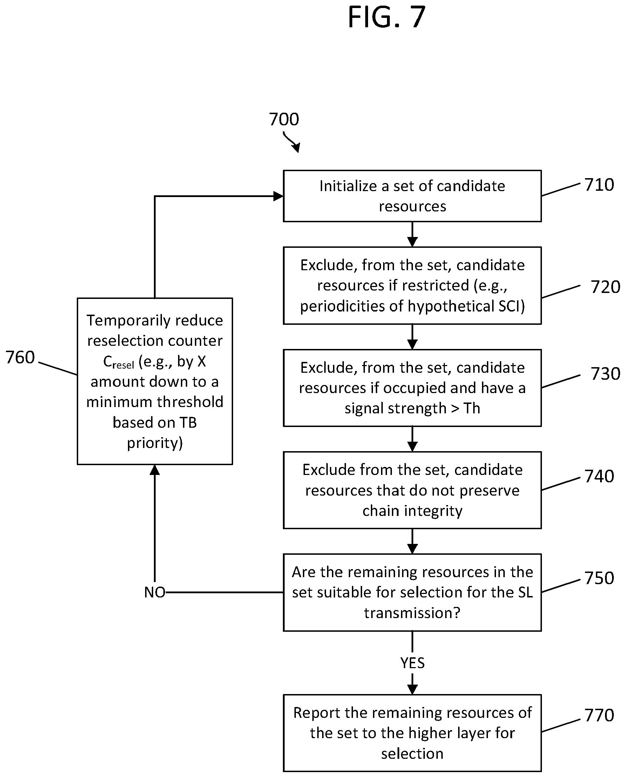

FIG. 7 is a flowchart depicting the method of selecting resources for a SL transmission depicted in FIG. 6, according to some embodiments of the present disclosure.

Referring to FIG. 7, a method 700 of selecting resources for a SL transmission may be performed, wherein a UE may be configured to: initialize a set of candidate resources (e.g., one or more of the resources within a resource selection window may initially be included in the set) (operation 710); exclude, from the set, candidate resources when they may be restricted (e.g., based on one or more exclusion criteria, such as excluding one or more periodicities corresponding to hypothetical SCI, e.g., based on an allowed periodicity value of the hypothetical SCI) (operation 720); exclude, from the set, candidate resources according to one or more exclusion criteria relating to occupied resources (e.g., determining whether a resource is unoccupied or occupied and/or excluding an occupied resource based on determining whether a signal strength (e.g., related to an RSRP measurement) of a transmission associated with the occupied resource may be below a priority threshold (Th)) (operation 730); exclude from the set, candidate resources that may not preserve a chain integrity of a chain of resources for the SL transmission (e.g., when a maximum time separation between a first resource and a second resource in the chain of resources for the SL transmission is outside of a signaling window (operation 740); determine whether the remaining candidate resources in the set may be suitable for selection by the UE for the SL transmission (e.g., based on a minimum number of candidate resources or a percentage of a number of resources, such as a total number of single-slot resources, corresponding to a resource selection window and/or a resource pool) (operation 750); adjust (e.g., temporarily reduce) a reselection counter $C_{resel}$ value corresponding to a periodic portion of the SL transmission to improve the chances of (e.g., reduce a delay in) finding sufficient resources, and perform the previous operations again and decreasing the reselection counter $C_{resel}$ value until the remaining candidate resources in the set are suitable for selection by the UE for the SL transmission (operation 760); and report the remaining candidate resources of the set to the higher layer for selection (e.g., by the UE, for the SL transmission) when the remaining candidate resources in the set are suitable for selection by the UE for the SL transmission (operation 770). Furthermore, the decrease in the number (e.g., the amount) of the reselection counter $C_{resel}$ value may be based on a priority of the SL transmission (e.g., the TB priority). For example, a minimum value (e.g., about 4) may be established for lower priority SL transmissions that may be higher than a minimum value (e.g., about 2) that may be established for higher priority SL transmissions. Accordingly, the resource selection criteria may be adjusted (e.g., relaxed) to help maintain chain integrity.

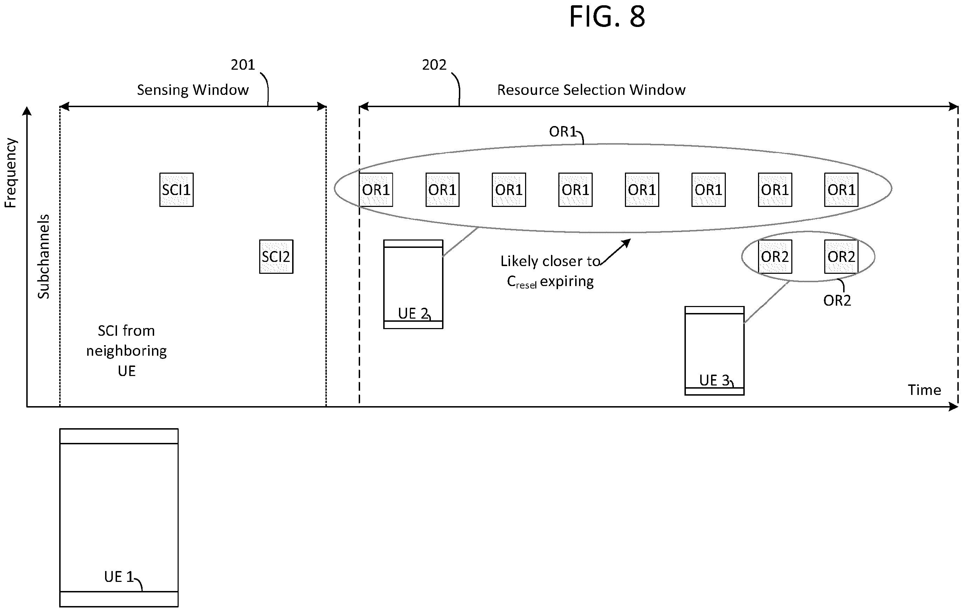

FIG. 8 is a timing diagram depicting a method of selecting resources for a SL transmission, according to some embodiments of the present disclosure.

Referring to FIG. 8, in some embodiments, it may be assumed that UEs that have already performed a large number of periodic transmissions on a given set of resources have reached, or are close to reaching, their reselection counter $C_{resel}$ value. For example, in the case of a resource shortage, a UE may first attempt to select resources that have been consistently used by neighboring UEs for a large number of periods because it is more likely that these neighboring UEs have reached their reselection counter $C_{resel}$ values.

For example, a reselection counter $C_{resel}$ value of neighboring UEs may be unknown (e.g., unknowable). Thus, a UE might not be able to identify slots at which neighboring UEs may attempt to select a different set of resources (e.g., when the reselection counter $C_{resel}$ expires). Accordingly, the UE may assume that neighboring UEs that have been using a same set of resources for a large number of periodic transmissions (e.g., over a large number of periods) are close to their reselection counter $C_{resel}$ value. Thus, when the UE lacks sufficient resources to maintain resource chain integrity, the UE may attempt to reuse the resources occupied by neighboring UEs that have been consistently using the same resources for a relatively extended duration. Although this method of resource selection might not guarantee that the selected resources will not have a collision, this method of resource selection may still reduce the risk of a collision as compared to using the resources of neighboring UEs that have more recently switched to a new set of resources.

To reuse the resources occupied by neighboring UEs that have been consistently using the same resources for a large number of periodic transmissions (e.g., over a large number of periods), the UE may count the number of times the resources are used by neighboring UEs over a sensing window. Furthermore, the UE may check that a neighboring UE has used a same set of resources for a number of periods above a given threshold before attempting to select the resources.

For example, and referring to FIG. 8, UE 1 may receive a first SCI SCI1 and a second SCI SCI2 in the sensing window 201. The SCI1 may correspond to a first set of resources OR1 occupied by UE 2 and SCI2 may correspond to a second set of resources OR2 occupied by UE 3. Furthermore, UE 2 may have been occupying the first set of resources OR1 for about 8 times (e.g., about 8 periods), while UE 3 may have been occupying the second set of resources OR2 for only about 2 times (e.g., about 2 periods). Accordingly, UE 1 may assume (e.g., determine) that UE 2 is closer to reaching its reselection counter $C_{resel}$ value than UE 3 because UE 2 has been using the same set of resources for a longer duration. Thus, UE 1 may determine that a risk of a resource collision is less likely when occupying the resources of UE 2. Furthermore, UE 1 may determine, based on a minimum periods of use threshold, that the first set of resources OR1 are suitable for selection (e.g., because a minimum periods of use threshold may be about 2 periods, and the first set of resources OR1 may have a same set of resources usage value of about 8 periods, which is above the minimum periods of use threshold).

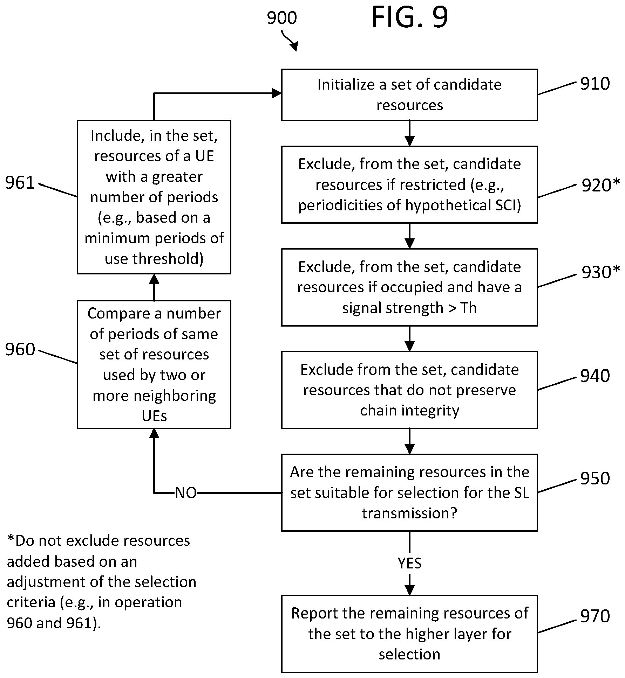

FIG. 9 is a flowchart depicting the method of selecting resources for a SL transmission depicted in FIG. 8, according to some embodiments of the present disclosure.

Referring to FIG. 9, a method 900 of selecting resources for a SL transmission may be performed, wherein a UE may be configured to: initialize a set of candidate resources (e.g., one or more of the resources within a resource selection window may initially be included in the set) (operation 910); exclude, from the set, candidate resources when they may be restricted (e.g., based on one or more exclusion criteria, such as excluding one or more periodicities corresponding to hypothetical SCI, e.g., based on an allowed periodicity value of the hypothetical SCI) (operation 920); exclude, from the set, candidate resources according to one or more exclusion criteria relating to occupied resources (e.g., determining whether a resource is unoccupied or occupied and/or excluding an occupied resource based on determining whether a signal strength (e.g., related to an RSRP measurement) of a transmission associated with the occupied resource may be below a priority threshold (Th)) (operation 930); exclude from the set, candidate resources that may not preserve a chain integrity of a chain of resources for the SL transmission (e.g., when a maximum time separation between a first resource and a second resource in the chain of resources for the SL transmission is outside of (e.g., does not fit within or is greater than) a signaling window (operation 940); determine whether the remaining candidate resources in the set may be suitable for selection by the UE for the SL transmission (e.g., based on a minimum number of candidate resources or a percentage of a number of resources, which may be a total number of single-slot resources, corresponding to a resource selection window and/or a resource pool) (operation 950); compare a number of periods of use of a same set of resources of one or more UEs with a number of periods of use of a same set of resources of one or more other neighboring UEs to enable the inclusion of more resources in the set, (operation 960); include, in the set resources of the neighboring UE with a greater number of periods of use of a same set of resources (e.g., based on a minimum periods of use threshold) and perform the previous operations again and compare resource usage of neighboring UEs until the remaining candidate resources in the set are suitable for selection by the UE for the SL transmission (operation 961); and report the remaining candidate resources of the set to the higher layer for selection (e.g., by the UE, for the SL transmission) when the remaining candidate resources in the set are suitable for selection by the UE for the SL transmission (operation 970). Furthermore, candidate resources, which are added based on such an inferred determination that a neighboring UE may be closer to its reselection counter $C_{resel}$ value, might not be excluded in subsequent iterations of the selection procedure. Accordingly, the resource selection/exclusion criteria may be adjusted (e.g., relaxed) to help maintain chain integrity.

Accordingly, embodiments of the present disclosure provide improvements to sidelink resource selection procedures in communication systems, such that resource collisions may be reduced (e.g., avoided), delays may be reduced, and throughput may be increased.

While embodiments of the present disclosure have been particularly shown and described with reference to the embodiments described herein, it will be understood by those of ordinary skill in the art that various changes in form and details may be made therein without departing from the spirit and scope of the present invention as set forth in the following claims and their equivalents.

**Claims**

1. A method of selecting, by a user equipment (UE), resources for a sidelink (SL) transmission, the method comprising:

    determining a signaling window corresponding to a maximum time separation between a first resource and a second resource for the SL transmission;
    signaling the first resource and the second resource to another UE;
    excluding, from a set of candidate resources for the SL transmission, an ineligible candidate resource that causes a time separation between the first resource and the second resource to be greater than the signaling window;
    identifying a number of remaining candidate resources in the set;
    determining that the number of remaining candidate resources in the set is below a candidate resource threshold; and
    adjusting exclusion criteria to include in the set an eligible candidate resource that is otherwise eligible for exclusion based on initial exclusion criteria.

2. The method of claim 1, further comprising repeating the adjusting the exclusion criteria until the remaining candidate resources in the set allow the UE to select resources such that the time separation between the first resource and the second resource is less than or equal to the signaling window, and the number of remaining candidate resources in the set is above the candidate resource threshold.

3. The method of claim 1, wherein the candidate resource that is otherwise eligible for exclusion comprises:

    a candidate resource that is reserved for another SL transmission having a RSRP value that is above a priority-based RSRP threshold, or
    a candidate resource that corresponds to an allowed periodicity value.

4. The method of claim 3, wherein the adjusting the exclusion criteria comprises increasing the priority-based RSRP threshold.

5. The method of claim 4, wherein the priority-based RSRP threshold is increased by about 1 decibel (dB) to about 3 dB.

6. The method of claim 4, wherein the priority-based RSRP threshold is increased by an amount that is based on a priority value corresponding to the SL transmission.

7. The method of claim 1, wherein the adjusting the exclusion criteria comprises excluding less than all of periodicities corresponding to an allowed periodicity value.

8. The method of claim 7, wherein the excluding less than all of the periodicities comprises excluding a subset of the periodicities based on a frequency of use of the subset of the periodicities in a geographical area.

9. The method of claim 1, wherein the adjusting the exclusion criteria comprises decreasing a reselection counter value to increase a likelihood of identifying candidate resources for a periodic transmission within an amount of time.

10. The method of claim 9, further comprising limiting a decrease in the reselection counter value to a threshold value.

11. The method of claim 10, further comprising setting the threshold value based on a priority value of the SL transmission.

12. The method of claim 1, further comprising:

comparing a duration of usage of a first same set of resources used by a first other UE with a duration of usage of a second same set of resources used by a second other UE; and
including in the set of candidate resources for the SL transmission, one or more resources corresponding to the first other UE or the second other UE based on a determination of a greater duration of usage.

13. A user equipment (UE) for performing a method of selecting resources for a sidelink (SL) transmission, wherein the UE is configured to:

determine a signaling window corresponding to a maximum time separation between a first resource and a second resource for the SL transmission;
signal the first resource and the second resource to another UE;
exclude, from a set of candidate resources for the SL transmission, an ineligible candidate resource that causes a time separation between the first resource and the second resource to be greater than the signaling window;
identify a number of remaining candidate resources in the set;
determine that the number of remaining candidate resources in the set is below a candidate resource threshold; and
adjust exclusion criteria to include in the set an eligible candidate resource that is otherwise eligible for exclusion based on initial exclusion criteria.

14. The UE of claim 13, wherein the UE is configured to repeat the adjusting the exclusion criteria until the remaining candidate resources in the set allow the UE to select resources such that the time separation between the first resource and the second resource is less than or equal to the signaling window, and the number of remaining candidate resources in the set is above the candidate resource threshold.

15. The UE of claim 13, wherein the candidate resource that is otherwise eligible for exclusion comprises:

a candidate resource that is reserved for another SL transmission having an RSRP value that is above a priority-based RSRP threshold, or
a candidate resource that corresponds to an allowed periodicity value.

FIG. 1

# FIG. 2

**Subchannel 0 used by four neighboring UEs**

203

32-slot signaling window

| Slot # | 0 | 1 | 2 | 3 | 4 | 5 | 6 | 7 | 8 | . . . | 30 | 31 | 32 | 33 | 34 | 35 | 36 | 37 | 38 |
|---|---|---|---|---|---|---|---|---|---|---|---|---|---|---|---|---|---|---|---|
| UE 1 | | | SL | | SL | | | | | | | | SL | | SL | | | | |
| UE 2 | | | | | | SL | SL | | | . . . | | | | | | SL | SL | | |
| UE 3 | | SL | | | | | | SL | SL | | | SL | | | | | | SL | SL |
| UE 4 | | | SL | | | | | | | . . . | | | | | | | | SL | |

Time

Resource Collision

EP 3 890 423 A1

# FIG. 3

**Summary of Mode 2 Resource Selection Procedure in NR V2X**

| | |
|---|---|
| Set selection window | I |
| Set sensing window and monitor all the slots by decoding PSCCH and measuring RSRP | II |
| Set threshold (Th) depending on the priority value | III |
| Set $S_A$ = {All the single-slot resources} | IV |
| Exclude resources if restricted | V |
| Exclude resources if they are occupied by a UE with higher priority and RSRP > Th | VI |
| Are the remaining resources in $|S_A| > 0.2M_{total}$? | VII |
| UE report the remaining resources of set $S_A$ to higher layer | VIII |

VII — Th = Th +3dB

NO

YES

## FIG. 4A

# FIG. 4B

# FIG. 5A

500A

Initialize a set of candidate resources — 510A

Exclude, from the set, candidate resources if restricted (e.g., periodicities of hypothetical SCI) — 520A

Exclude, from the set, candidate resources if occupied and have a signal strength > threshold (Th) — 530A

Exclude from the set, candidate resources that do not preserve chain integrity — 540A

Are the remaining resources in the set suitable for selection for the SL transmission? — 550A

560A — Increase Th by X dB (e.g., based on TB priority)

NO

YES

Report the remaining resources of the set to the higher layer for selection — 570A

# FIG. 5B

500B

Initialize a set of candidate resources —510B

Exclude, from the set, candidate resources if restricted (e.g., all, or less than all, periodicities corresponding to an allowed periodicity value for hypothetical SCI)* —520B

Exclude, from the set, candidate resources if occupied and have a signal strength > Th —530B

Exclude from the set, candidate resources that do not preserve chain integrity —540B

Are the remaining resources in the set suitable for selection for the SL transmission? —550B

560B— Exclude less than all periodicities for hypothetical SCI*

NO

YES

Report the remaining resources of the set to the higher layer for selection —570B

*Exclusion of less than all periodicities for hypothetical SCI may be based on geographical frequency of use.

FIG. 6A

Resource Selection Window

202

$C_{resel} = 5$

UR    UR    UR    UR    UR

X    X+20    X+40    X+60    X+80

Period = 20

Frequency

Subchannels

Time

UE 1

EP 3 890 423 A1

FIG. 6B

# FIG. 7

700

Initialize a set of candidate resources — 710

Exclude, from the set, candidate resources if restricted (e.g., periodicities of hypothetical SCI) — 720

Exclude, from the set, candidate resources if occupied and have a signal strength > Th — 730

Exclude from the set, candidate resources that do not preserve chain integrity — 740

Are the remaining resources in the set suitable for selection for the SL transmission? — 750

760 — Temporarily reduce reselection counter $C_{resel}$ (e.g., by X amount down to a minimum threshold based on TB priority)

NO

YES

Report the remaining resources of the set to the higher layer for selection — 770

# FIG. 8

Sensing Window 201

Resource Selection Window 202

Frequency

Subchannels

SCI1

SCI2

SCI from neighboring UE

OR1

OR1 OR1 OR1 OR1 OR1 OR1 OR1 OR1

UE 2

Likely closer to $C_{resel}$ expiring

OR2 OR2

OR2

UE 3

Time

UE 1

EP 3 890 423 A1

900   FIG. 9

Initialize a set of candidate resources — 910

Exclude, from the set, candidate resources if restricted (e.g., periodicities of hypothetical SCI) — 920*

Exclude, from the set, candidate resources if occupied and have a signal strength > Th — 930*

Exclude from the set, candidate resources that do not preserve chain integrity — 940

Are the remaining resources in the set suitable for selection for the SL transmission? — 950

961 — Include, in the set, resources of a UE with a greater number of periods (e.g., based on a minimum periods of use threshold)

960 — Compare a number of periods of same set of resources used by two or more neighboring UEs

NO

YES

Report the remaining resources of the set to the higher layer for selection — 970

*Do not exclude resources added based on an adjustment of the selection criteria (e.g., in operation 960 and 961).

Europäisches
Patentamt

European
Patent Office

Office européen
des brevets

## EUROPEAN SEARCH REPORT

Application Number

EP 21 15 7858

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/029340 A1 (HE CHAO [US] ET AL) 23 January 2020 (2020-01-23) * paragraph [0200] - paragraph [0209] * * figure 15 * * paragraph [0153] * | 1-4,7-15 | INV. H04W72/08 |
| X | WO 2019/066629 A1 (LG ELECTRONICS INC [KR]) 4 April 2019 (2019-04-04) * paragraph [0158] - paragraph [0164] * | 1-6, 13-15 | |
| X | INTEL CORPORATION: "UE-Autonomous Resource Allocation for NR V2X Sidelink Communication", 3GPP DRAFT; R1-1908635 INTEL - EV2X_SL_M2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20190826 - 20190830 17 August 2019 (2019-08-17), XP051765243, Retrieved from the Internet: URL:http://www.3gpp.org/ftp/tsg_ran/WG1_RL1/TSGR1_98/Docs/R1-1908635.zip [retrieved on 2019-08-17] * section 2.6 * | 1-4,6, 13-15 | |

TECHNICAL FIELDS
SEARCHED (IPC)

H04W

The present search report has been drawn up for all claims

| Place of search | Date of completion of the search | Examiner |
|---|---|---|
| The Hague | 27 August 2021 | Torrea Duran, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 890 423 A1**

**ANNEX TO THE EUROPEAN SEARCH REPORT
ON EUROPEAN PATENT APPLICATION NO.**

EP 21 15 7858

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2021

| Patent document cited in search report | | | Publication date | Patent family member(s) | | | Publication date |
|---|---|---|---|---|---|---|---|
| US 2020029340 | A1 | | 23-01-2020 | EP | 3818758 | A1 | 12-05-2021 |
| | | | | KR | 20210024197 | A | 04-03-2021 |
| | | | | US | 2020029340 | A1 | 23-01-2020 |
| | | | | WO | 2020017939 | A1 | 23-01-2020 |
| WO 2019066629 | A1 | | 04-04-2019 | CN | 111149397 | A | 12-05-2020 |
| | | | | EP | 3672338 | A1 | 24-06-2020 |
| | | | | WO | 2019066629 | A1 | 04-04-2019 |

EPO FORM P0459

For more details about this annex : see Official Journal of the European Patent Office, No. 12/82

**EP 3 890 423 A1**

**Patent documents cited in the description**

- US 63002143